Europäisches Patentamt

European Patent Office

Office européen des brevets

(11) Publication number: **0 154 428**
**B1**

(12) **EUROPEAN PATENT SPECIFICATION**

(45) Date of publication of patent specification: **29.08.90**

(21) Application number: **85300943.9**

(22) Date of filing: **13.02.85**

(51) Int. Cl.⁵: **B 32 B 15/08**

(54) **Plastics film laminate.**

(30) Priority: **02.03.84 GB 8405607**

(43) Date of publication of application:
**11.09.85 Bulletin 85/37**

(45) Publication of the grant of the patent:
**29.08.90 Bulletin 90/35**

(84) Designated Contracting States:
**AT BE CH DE FR GB IT LI LU NL SE**

(56) References cited:
**EP-A-0 026 106**
**BE-A- 856 564**
**DE-A-2 719 113**
**FR-A-2 516 860**
**GB-A-1 579 832**

(73) Proprietor: **BOWATER PACKAGING LIMITED**
**Bowater House Knightsbridge**
**London SW1X 7LR (GB)**

(72) Inventor: **Kelly, Roger Sidney Arthur**
**Mothersoles Low Street Bardwell**
**Bury St. Edmunds Sufflok (GB)**

(74) Representative: **Wain, Christopher Paul et al**
**A.A. THORNTON & CO. Northumberland House**
**303-306 High Holborn**
**London WC1V 7LE (GB)**

Courier Press, Leamington Spa, England.

## Description

This invention relates to the use of a flexible plastics film laminate for packaging materials which are sensitive to oxygen and/or water vapour.

It is well known to package materials in plastics films or plastics film laminates. Where the materials are sensitive to oxygen and/or water vapour (e.g. materials such as certain foodstuffs, beverages, chemicals, pharmaceuticals, seeds, electrical components, etc.), a plastics packaging material is chosen which will provide a barrier against ingress of oxygen and/or water vapour. It is also well known to package certain foodstuffs in an atmosphere of gas contained within a plastics material chosen for its low permeability to that gas (controlled atmospheric packaging). One such plastics film which has the property of low permeability to oxygen, other gases and water vapour, is metallised poly(ethylene glycol) terephthalate (hereafter PET), a single web of which may typically provide an oxygen barrier of about 1 ml/metre$^2$/day. By laminating metallised PET to a further web of metallised film, either another ply of metallised PET or another metallised thermoplastic polymer film, further reductions in permeability can be achieved. U.K. patent application No. 2103999A describes such a packaging material comprising a laminate of two layers of metallised thermoplastic polymer film, at least one of which is metallised PET.

Whilst the use of metallised PET is highly advantageous in packaging moisture-and/or oxygen-sensitive materials, because of its excellent barrier properties, it also has some disadvantages, for example:

a) It is not readily heat-sealable. In order, therefore, to make a heat-sealable packaging material based on metallised PET, at least one external layer of a heat-sealable material, for example a polyolefine such as polyethylene, must be provided. Furthermore, the presence of only a heat-sealable external layer is not always entirely satisfactory since it only permits the making of fin seals. If overlap seals are required, a second ply of heat-sealable material must be provided (on the opposite side of the PET from the first such layer). The provision of these extra heat-sealable layers increases costs.

b) PET is expensive relative to certain other thermoplastic films, for example certain polyolefine films like polyethylene or polypropylene.

c) PET has only moderate resistance to flex-cracking, so laminates based on metallised PET used for packaging, for example, low viscosity liquids, can rupture due to flexural stresses when such packages are transported over long distances or over rough terrain.

Metallised polyolefine films and their laminates are also used in packaging and generally have lower costs and better flex-crack resistance than metallised PET and metallised PET laminates. Many polyolefine films are also heat-sealable in their own right so the addition of a further heat sealing ply can often be omitted. However, in comparison with metallised PET, they have poor gas barrier properties, typically an oxygen permeability of >30 ml/metre$^2$/24 hours, which is not greatly improved on lamination. U.K. patent specification No. 1566925 describes in its Examples laminates of metallised polypropylene film with various unmetallised polyolefine films, such laminates having oxygen permeabilities in the range 20—50 ml/metre$^2$/24 hours. These laminates are thus generally unsuitable for packaging oxygen sensitive materials or for other applications requiring gas barrier.

German OS 2719113 describes a plastics film laminate useful for barrier packaging and comprising a gas-impermeable and/or water vapour-impermeable and odour-impermeable carrier film (e.g. polyamide, polypropylene or cellulose), laminated to a thermoplastic polyolefine film with a metallic coating or metallic pigmentation.

We have now found that, in contrast to prior teachings, it is not necessary to use a metallised film which itself has good gas barrier properties, such as metallised PET or the carrier film of German OS 2719113, in order to make a film laminate suitable for barrier packaging. Rather, we have found that by laminating certain metallised polyolefine films which films do not themselves have good gas barrier properties, to either themselves or other metallised films (such as another metallised polyolefine film, a metallised regenerated cellulose film of a metallised polyamide (nylon) film), it is possible to produce laminates with good gas and moisture barrier properties similar to or better than conventional packaging laminates of metallised PET/ unmetallised polyolefine. Furthermore, as will be appreciated, the other inherent properties of polyolefine films, such as low cost, good flex crack resistance and heat sealability can be built into the laminate by a suitable choice of polyolefine film, metallisation and laminate structure.

The improvement in oxygen and moisture barrier achievable by laminating two metallised films in accordance with the present invention is considerably higher than might be anticipated from known technology. Thus it is normally anticipated that when two non-metallised films, each with gas permeability X, are laminated together, the gas permeability of the laminate is approximately 0.5X. In contrast, when two metallised films are laminated, in accordance with the present invention, improvements in barrier of typically 10 to 100 fold are achieved. It is this improvement in barrier which essentially distinguishes the laminates of this invention from previously described laminates such as those described in U.K. 1566925.

The present invention provides the use of a flexible plastics film laminate, having good barrier to oxygen and/or water vapour, for packaging materials which are sensitive to oxygen and/or water vapour, said laminate comprising two layers of metallised thermoplastic film joined together by a layer of adhesive; characterised in that each said layer is metallised at least on the face closest to the other film; one film is of polyolefine and the other film is of polyolefine, regenerated cellulose or polyamide, and wherein each said metallised film on its own does not have good barrier to oxygen and/or water vapour, but the barrier of the laminate is substantially better than the sum of the barriers of the constituent metallised films.

Belgian patent 856564 describes a transparent plastics film laminate which comprises at least two sheets of plastic material, preferably polyvinyl chloride, polyesters, polyethylene or polycarbonates, each sheet being coated on one of its surfaces with a very thin layer of a metal (e.g. silver, aluminium or lead), and the sheets being joined by a transparent adhesive. The patent does not describe the use of any such transparent laminates for barrier packaging. Further, the laminates used in the present invention are a barrier to light.

In the laminates used in the present invention, each film can be metallised on one or both of its surfaces, but the films are laminated with the two metallised surfaces face-to-face. If each film is metallised on only one surface, then by adhering the two films together with the metal layers face-to-face, the metallised faces are inherently protected from damage via scratching, scuffing, etc. If both film A and film B are heat-sealable polyolefines, the laminate can be heat sealed either A/A or B/B or A/B.

The nature of the adhesive is not critical. Various curing and non-curing packaging grade adhesives, or hot melt resin adhesives or extrusion lamination with a polyolefine or similar thermoplastic resin can be used. We prefer to use a moisture resistant, one or two component polyurethane curing adhesive.

The polyolefine film A can include the polyethylenes, including low, medium and high density, linear and branched chain polyethylenes or their copolymers, or polypropylenes, including polypropylene homopolymer or copolymer films, coextruded polypropylene films (including films with a polypropylene core and a coextruded surface of another polyolefine) and polypropylene films with a surface coating such as acrylic of PVdC. The polyolefine can be heat-sealable or non-heat-sealable, cast or oriented. In general, any polyolefine can be used in the invention provided that it can be suitably metallised, i.e. provided it has a surface capable of adequate adhesion to the metal.

Film B can include any of the polyolefine films described above, or polyamide (cast or oriented), or regenerated cellulose.

As will be understood, the films chosen for the laminate may depend on the use to which the laminate is to be put, for example having regard to the mechanical, barrier, constructional, hygiene and cost requirements of the package.

Commercially available polyolefine films preferably used to make the laminates used in this invention will normally be from about 6 to 400 μm thick, preferably 8 to 100 μm thick. Such laminates will thus normally have a thickness of about 12 to 800 μm, preferably about 16 to 200 μm, plus the thickness of the metal layers (e.g. 0.02 to 0.06 μm) and the thickness of the adhesive (not normally above about 10 μm). It will be appreciated that the thickness and construction of a laminate will be chosen having regard to its intended use and cost, the thicker laminates usually having greater mechanical strength, resistance to wear, better seal integrity (in the case of heat-sealable laminates) and higher cost, whilst the thinner laminates are less costly and more flexible for packaging purposes.

Heat-sealable packages can be made from heat-sealable laminates of the invention in a conventional manner.

The laminates are used for barrier packaging. Because of their low light transmission and the extremely low probability that scratches in one of the metal layers will be coincident with scratches in the other metal layer, they can advantageously be used for barrier packaging light sensitive materials such as photographic or X-ray films or photographic or other light sensitive chemicals.

It is an important feature of the present invention that the two films (which are adhered together to form a laminate of the invention) are both metallised. The same barrier effect is not achieved if only one of the films is metallised even if it is metallised on both surfaces and/or to a thickness the same as or greater than twice the normal thickness. The laminates of the invention will have an oxygen permeability of less than 5 ml/m²/24 hours, preferably less than 1 ml/m²/24 hours.

In order that the invention may be more fully understood, the following Examples are given by way of illustration only.

Example 1

A 40 μm commercially available corona treated medium density polyethylene film was metallised with aluminium on the treated surface by vaporisation in vacuo, in accordance with known techniques, so as to deposit 400Å (0.04 μm) of aluminium.

After metallisation, oxygen permeability of this film was in excess of 50 ml/metre²/24 hours/atmosphere, making the film unsuitable for packaging of oxygen sensitive products.

The metallised surface of this film was coated with a layer of a commercially available two-component polyurethane adhesive and dried to give a coat weight of 2.8 grams/metre². This adhesive coated surface was then calendered to the metallised surface of a furhter sample of the same metallised 40 μm medium density polyethylene film. After leaving for 1 week to allow the adhesive to cure, an oxygen permeability of 0.2 μm/metre²/24 hours/atmosphere was measured on the laminate at 23°C and 0% relative humidity, making the laminate suitable for packaging many oxygen sensitive products. Moisture vapour transmission rate of the sample was 0.26 gram/ metre²/24 hours at 38°C, 90% relative humidity, and less than 0.1 gram/metre²/24 hours at 23°C, 50% relative humidity.

This sample was flexed 100 times on a Gelbo flexing machine. Moisture vapour transmission rate of the flexed sample was 0.29 gram/metre²/24 hours at 38°C, 90% relative humidity, i.e. not significantly higher than the unflexed material.

Packs were produced from this laminate on commercial packaging machinery with both fin and overlap seals.

A control sample in which the metallised and adhesive coated 40 μm polyethylene film was laminated to unmetallised polyethylene film had an oxygen permeability of greater than 25 ml/metre²/24 hours/atmosphere.

Example 2

Example 1 was repeated laminating the same metallised 40 μm polyolefine film to a 24 μm metallised PVDC coated regenerated cellulose film commercially available as '365 Cello M1' from British Cellophane Ltd. This latter film has an oxygen permeability of 4 ml/metre²/24 hours/atmosphere at 23°C and 0% relative humidity and a moisture vapour transmission rate of 5 grams/metre²/24 hours at 38°C and 90% relative humidity. The resultant laminate had an oxygen permeability of 0.8 ml/metre²/24 hours/atmosphere at 23°C and 0% relative humidity and a moisture vapour transmission rate of 1.2 gram/metre²/24 hours at 38°C and 90% relative humidity.

Example 3

A 15 μm commercially available corona treated oriented nylon 6 (polyamide) film was metallised with aluminium on the treated surface so as to deposit 500Å (0.05 μm) of aluminium.

The metallised surface of this film was coated with a layer of a commercially available two component polyurethane adhesive and dried to give a coat weight of 2.7 grams/metre². This adhesive coated surface was then calendered to the metallised surface of the metallised 40 μm medium density polyethylene film described in Example 1 above. After curing the laminate had an oxygen permeability of 0.1 ml/metre²/24 hours/atmosphere at 23°C and 0% relative humidity, and a moisture vapour transmission rate of less than 0.1 gram/metre²/24 hours at 23°C and 50% relative humidity.

Example 4

An 8 μm oriented polypropylene coextruded film which is commercially available was metallised with aluminium so as to deposit 500Å (0.05 μm) of aluminium. After metallisation, oxygen permeability of this film was in excess of 50 ml/metre²/24 hours/atmosphere. The metallised surface of this film was laminated to metallised 40 μm medium density polyethylene as described in Example 1. After curing, an oxygen permeability of 2.2 ml/metre²/24 hours/atmosphere at 23°C and 0% relative humidity and a moisture vapour transmission rate of less than 0.1 gram/metre²/24 hours at 23°C and 50% relative humidity were measured on the laminate. Infra-red emmissivity of the unmetallised surface of the 8 μm polypropylene film was 0.11. A control sample in which the 8 μm metallised polypropylene was replaced by 12 μm metallised PET has an emissivity of 0.57.

Example 5

An 8 μm oriented polypropylene coextruded film which is commercially available was metallised on both surfaces so as to deposit a total of 400Å (0.04 μm) of aluminium, approximately 0.02 μm (200Å) on each side. After metallisation, oxygen permeability of this film was in excess of 50 ml/metre²/24 hours/atmosphere. One surface of the film was laminated to metallised 40 μm medium density polyethylene as described in Example 1 above, and the other surface was over-lacquered with 1.0 gram/metre² of a commercially available nitrocellulose lacquer. After curing, an oxygen permeability of 4.1 ml/metre²/24 hours/atmosphere at 23°C and 0% relative humidity, and a moisture vapour transmission rate of less than 0.1 gram/metre²/24 hours at 23°C and 50% relative humidity were measured on the laminate.

Example 6

A 15 μm commercially available high density polyethylene film, corona treated on both sides, was metallised with aluminium on both sides so as to deposit a total of 400Å (0.04 μm) aluminium, approximately 0.02 μm (200Å) on each side. After metallisation, oxygen permeability of this film was in excess of 50 ml/metre²/24 hours/atmosphere. This film was laminated to metallised 40 μm medium density polyethylene as described in Example 1 above, and the exposed metallised surface was over-lacquered with 1.0 gram/metre² of a commercially available nitro-cellulose lacquer. After curing, an oxygen permeability of 3.7 ml/metre²/24 hours/atmosphere at 23°C and 0% relative humidity, and a moisture vapour transmission rate of less than 0.1 gram/metre²/24 hours at 23°C and 50% relative humidity were measured on the laminate.

Example 7

Example 3 was repeated laminating the metallised polyamide film to a 75 μm commercially available corona treated low density polyethylene film metallised with aluminium on the treated side so as to deposit 400Å (0.04 μm) of aluminium. After curing, the laminate had an oxygen permeability of 0.2 ml/metre²/24 hour/atmosphere at 23°C relative humidity, and a moisture vapour transmission rate of less than 0.2 gram/metre²/24 hours at 23°C and 50% relative humidity.

Example 8

Example 7 was repeated laminating the metallised polyamide film to a 75 μm commercially available corona treated linear low density polyethylene film metallised with aluminium on the treated side so as to deposit 400Å (0.04 μm) of aluminium. After curing, the laminate had an oxygen permeability of 0.2 ml/metre$^2$/24 hours/atmosphere at 23°C and 0% relative humidity and a moisture vapour transmission rate of less than 0.2 gram/metre$^2$/24 hours at 23°C and 50% relative humidity.

## Claims

1. The use of a flexible plastics film laminate, having good barrier to oxygen and/or water vapour, for packaging materials which are sensitive to oxygen and/or water vapour, said laminate comprising two layers of metallised thermoplastic film joined together by a layer of adhesive; characterised in that: each said layer is metallised at least on the face closest to the other film; one film of polyolefine and the other half is of polyolefine, regenerated cellulose or polyamide, and wherein each said metallised film on its own does not have good barrier to oxygen and/or water vapour, but the barrier of the laminate is substantially better than the sum of the barriers of the constituent metallised films.

2. The use according to claim 1, wherein both said films are of polyolefine and at least one is heat-sealable.

3. The use according to claim 2, wherein both said films are heat-sealable polyethylenes.

4. The use according to claim 1, wherein said other film is PVdC coated regenerated cellulose.

5. The use according to claim 1, wherein said other film is nylon 6.

6. The use according to any of claims 1 to 5, wherein both said films have been metallised with aluminium.

7. The use according to any preceding claim, wherein said laminate has an oxygen permeability of less than 5 ml/m$^2$/24 hours.

8. The use according to claim 7, wherein said laminate has an oxygen permeability of less than 1 ml/m$^2$/24 hours.

## Patentansprüche

1. Verwendung eines flexiblen Kunststoffilmlaminates mit guter Sperre gegenüber Sauerstoff und/oder Wasserdampf für Verpackungsmaterialien, die sauerstoff- und/oder wasserdampfempfindlich sind, wobei das Laminat zwei Schichten metallisierter thermoplastischer Filme, die miteinander durch eine Klebstoffschicht verbunden sind, umfaßt; dadurch gekennzeichnet, daß jede der Schichten wenigstens auf der Fläche, die dem anderen Film am nächsten ist, metallisiert ist; ein Film aus Polyolefin und der andere Film aus Polyolefin, regenerierter Cellulose oder Polyamid besteht und wobei jeder der metallisierten Filme für sich selbst keine gute Sperre gegenüber Sauerstoff und/oder Wasserdampf besitzt, jedoch die Sperre des Laminats wesentlich besser ist als die Summe der Sperren der zusammensetzenden metallisierten Filme.

2. Verwendung nach Anspruch 1, wobei beide Filme aus Polyolefin sind und mindestens einer verschweißbar ist.

3. Verwendung nach Anspruch 2, wobei beide Filme aus verschweißarem Polyethylen bestehen.

4. Verwendung nach Anspruch 1, wobei der andere Film PVdC-beschichtete regenerierte Cellulose ist.

5. Verwendung nach Anspruch 1, wobei der andere Film Nylon 6 ist.

6. Verwendung nach mindestens einem der Ansprüche 1 bis 5, wobei beide Filme mit Aluminium metallisiert worden sind.

7. Verwendung nach mindestens einem der vorangehenden Ansprüche, wobei das Laminat eine Sauerstoffpermeabilität von weniger als 5 ml/m$^2$/24 Stunden aufweist.

8. Verwendung nach Anspruch 7, wobei das Laminat eine Sauerstoffpermeabilität von weniger als 1 ml/m$^2$/24 Stunden aufweist.

## Revendications

1. Utilisation d'un stratifié souple de films plastiques, présentant une bonne barrière à l'oxygène et/ou à la vapeur d'eau, pour emballer des produits qui sont sensibles à l'oxygène et/ou à la vapeur d'eau, ledit stratifié comprenant deux couches de films thermoplastiques métallisés réunies par une couche d'adhésif, caractérisée en ce que chaque couche est métallisée au moins sur le côté le plus proche de l'autre film, un film est constitué par une polyoléfine et l'autre film est constitué par une polyoléfine, une cellulose régénérée ou un polyamide, et chacun desdits films métallisés ne forme pas par lui-même une bonne barrière à l'oxygene et/ou à la vapeur d'eau, mais la barrière du stratifié est sensiblement meilleure que la somme des barrières des films métallisés constitutifs.

2. Utilisation selon la revendication 1, dans laquelle les deux films sont de polyoléfine at au moins l'un d'eux est thermoscellable.

3. Utilisation selon la revendication 2, dans laquelle les deux films sont des polyéthylènes thermoscellables.

4. Utilisation selon la revendication 1, dans laquelle ledit autre film est en cellulose régénérée revêtue de chlorure de polyvinylidène.

5. Utilisation selon la revendication 1, dans laquelle ledit autre film est en Nylon 6.

6. Utilisation selon l'une des revendications 1 à 5, dans laquelle les deux films ont été métallisés par de l'aluminium.

7. Utilisation selon l'une des revendications précédentes, dans laquelle ledit stratifié a une perméabilité à l'oxygène inférieure à 5 ml/m$^2$/24 h.

8. Utilisation selon la revendication 7, sans laquelle ledit stratifié a une perméabilité à l'oxygène inférieure à 1 ml/m$^2$/24 h.